# EUROPEAN PATENT SPECIFICATION

(11) **EP 2 709 004 B1**
(45) Date of publication and mention of the grant of the patent: **28.12.2016**
(21) Application number: 12819047.7
(22) Date of filing: 29.10.2012
(51) Int. Cl.: G06F 9/44, G06F 9/54, H04L 29/08, G06F 9/46

(54) **SENSING DATA PROCESSING METHOD AND COMPUTING NODE**
VERFAHREN ZUR VERARBEITUNG VON SENSORDATEN UND RECHENKNOTEN DAFÜR
PROCÉDÉ DE TRAITEMENT DE DONNÉES DE DÉTECTION ET NOEUD DE CALCUL

(30) Priority: 01.03.2012 CN 201210051773
(43) Date of publication of application: 19.03.2014
(73) Proprietor: Huawei Technologies Co., Ltd., Longgang District Shenzhen, Guangdong 518129 (CN)
(72) Inventor: LU, Yuanfei, Shenzhen Guangdong 518129 (CN); LIU, Gang, Shenzhen Guangdong 518129 (CN); LIU, Cunwei, Shenzhen Guangdong 518129 (CN)
(74) Representative: Isarpatent
(86) International application number: PCT/CN2012/083663
(87) International publication number: WO 2013/127187

(56) References cited:
- CN-A- 101 627 361
- CN-A- 101 681 236
- CN-A- 102 262 542
- CN-A- 102 662 646
- US-A1- 2002 184 348
- US-A1- 2012 036 549
- US-B1- 8 037 485
- BOULIS A ET AL: "A framework for efficient and programmable sensor networks", OPEN ARCHITECTURES AND NETWORK PROGRAMMING PROCEEDINGS, 2002 IEEE 28-29 JUNE 2002, PISCATAWAY, NJ, USA,IEEE, 28 June 2002 (2002-06-28), pages 117-128, XP010593762, DOI: 10.1109/OPNARC.2002.1019233 ISBN: 978-0-7803-7457-7

## Description

### FIELD OF THE INVENTION

The present invention relate to sensor application technologies, and in particular, to a method for processing sensor data and a computing node.

### BACKGROUND OF THE INVENTION

Sensor devices are applied widely in terminals. Terminals herein are a generic term for terminals such as mobile phones, e-books, tablet computers, electronic albums, and the like. The widespread use of sensor devices improves user experience with more diversified functions.

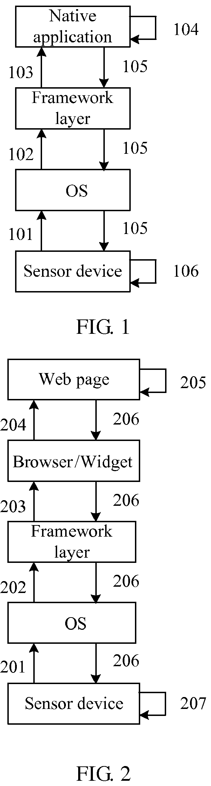

US patent NO.8, 037, 485 discloses a method for abstracting data acquisition and management including: providing a cross-platform application program interface for a software application that runs in an application execution environment running on a computing platform; receiving a request, through the cross-platform application program interface, from the software application for access to a real-time sensor device; and in response to the request, identifying which of multiple predetermined sensor devices is currently available, the identified sensor device being configured to provide real-time data, determining an interval based on information associated with the software application, and providing data derived from the identified sensor device to the software application in accordance with the interval. US 2002/0184348 discloses an object oriented sensing/control framework architecture includes a sensor/controller framework module, an application services framework module, a signal database, and an application database. The sensor/controller framework module may exist within a sensor/controller gateway; the application services framework module may exist within an application services system, communication between the framework services module and application software comprises the exchange of events or event messages. FIG. 1 is a schematic diagram of an interaction model of a sensor device in the prior art. As shown in FIG. 1, a native application interacts with a sensor device directly, without necessity of using web pages for accessing. Almost all current terminal operating systems (OS) employ such an interaction mode. The following is an interaction model:
101. A sensor device responds to a user response or an external environment change, and transmits sensor data to an OS.
102. The OS processes the sensor data and transmits the processed sensor data to a Framework layer.
103. The Framework layer determines whether a native application is in a state of being ready for receiving data, and if yes, transmits a sensor event to the native application. A Framework layer may be added or deleted depending on different implementations of the OS.
104. The native application responds to the sensor event and generates a response event for operating the sensor device.
105. The response event is transmitted downstream till the sensor device.
106. The sensor device makes a response.

In the above solution, different OSs provide different system calling interfaces and use different programming languages. For example, Java and C++ are used on an Android platform, but Object-C is used on the iOS platform of Apple Corporation. Consequently, if the same application needs to run on different OS platforms at the same time, different code is required and needs to be compiled separately, which increases development and maintenance costs.

### SUMMARY OF THE INVENTION

Embodiments of the present invention provide a method for processing sensor data and a computing node to solve, to some extent, a problem that an application cannot run across platform due to a direct interaction between a native application and a sensor device in the prior art.

In one aspect, an embodiment of the present invention provides a method for processing sensor data, applied to a computing node, where the computing node includes a hardware layer, an operating system, OS running on the hardware layer, and a browser engine running on the OS, where the hardware layer includes a first sensor device. The method includes:
sensing, by the first sensor device, a state change, generating sensor data, and transmitting the sensor data to the OS in form of an event;
determining, by the OS, an event type of the event according to the sensor data, and transmitting the sensor data and the event type to the browser engine, where the sensor data is also transmitted to the browser engine in form of an event; and
determining, by the browser engine according to the event type, that the event has been registered, and executing processing logic of the event; wherein the processing logic of the event is event listening code, and the processing logic of the event is added by an authorized developer for a node in the DOM tree of an web page beforehand for the purpose of monitoring state change of the first sensor device; wherein the web page is formed by the DOM tree; wherein
   the browser engine comprises a browser Shell, a web page parsing and rendering engine, and a script parsing engine, and the determining, by the browser engine according to the event type, that the event has been registered, and executing processing logic of the event comprises:
receiving, by the browser Shell, the sensor data and the event type transmitted by the OS, determining a first web page associated with the event according to the event type, and transmitting the first web page, the sensor data, and the event type to the web page parsing and rendering engine, wherein the sensor data is transmitted by the OS in form of an event; and
   determining, by the web page parsing and rendering engine, according to the event type, that the first node has registered the event, and searching out, according to an identifier of the first node and the event type, a portal of the processing logic of the event, and calling the script parsing engine to execute the processing logic of the event; wherein the first node is one or more nodes in the DOM tree of the first web page, the portal of the processing logic of the event is an address for storing the processing logic of the event;
wherein the processing logic of the event comprises a portal of calling a sensing method of a second sensor device, and the calling the script parsing engine to execute the processing logic of the event specifically comprises: calling, by the script parsing engine, the sensing method of the second sensor device according to the portal of calling the sensing method of the second sensor device, wherein the portal of calling the sensing method of the second sensor device is added into the processing logic of the event by the authorized developer beforehand.

In another aspect, an embodiment of the present invention provides a computing node, which includes a hardware layer, an operating system, OS running on the hardware layer, and a browser engine running on the OS, where the hardware layer includes a first sensor device.
the first sensor device is configured to sense a state change, generate sensor data, and transmit the sensor data to the OS in form of an event;
the OS is configured to determine an event type of the event according to the sensor data, and transmit the sensor data and the event type to the browser engine, where the sensor data is also transmitted to the browser engine in form of an event; and
the browser engine is configured to determine, according to the event type, that the event has been registered, and execute processing logic of the event; wherein the processing logic of the event is event listening code, and the processing logic of the event is added by an authorized developer for a node in the DOM tree of an web page beforehand for the purpose of monitoring state change of the first sensor device; wherein the web page is formed by the DOM tree; wherein the browser engine comprises a browser Shell, a web page parsing and rendering engine, and a script parsing engine; wherein:
the browser Shell is configured to receive the sensor data and the event type transmitted by the OS, determine a first web page associated with the event according to the event type, and transmit the first web page, the sensor data, and the event type to the web page parsing and rendering engine;
the web page parsing and rendering engine is configured to determine, according to the event type, that the first node has registered the event, search out, according to the identifier of the first node and the event type, a portal of the processing logic of the event, and call the script parsing engine; wherein the first node is one or more nodes in the DOM tree of the first web page, the portal of the processing logic of the event is an address for storing the processing logic of the event; and
the script parsing engine is configured to execute the processing logic of the event; wherein the terminal further comprises a second sensor device, wherein the processing logic of the event comprises a portal of calling a sensing method of the second sensor device, the portal of calling the sensing method of the second sensor device is added into the processing logic of the event by the authorized developer beforehand, and the script parsing engine is specifically configured to: call the sensing method of the second sensor device according to the portal of calling the sensing method of the second sensor device.

At least one technical solution of the foregoing technical solutions has the following advantages or beneficial effects:
The embodiments of the present invention adopt such a technique: a sensor device senses a state change, generates sensor data, and transmits the sensor data to an OS in form of an event; the OS determines the event type of the event, and transmits the sensor data and the event type to a browser engine; according to the event type, the browser engine determines that the event has been registered, and executes processing logic of the event. In this way, the browser engine shields difference between different OSs, and solves, to some extent, a problem that an application cannot run across platform due to a direct interaction between a native application and a sensor device in the prior art; with code written only once, the written application is capable of running on different OSs, thereby enabling an application to run across platform.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of an interaction model of a sensor device in the prior art;
FIG. 2 is a schematic diagram of an interaction model according to the present invention;
FIG. 3 is a schematic flowchart of an application based on the interaction model shown in FIG. 2;
FIG. 4 is a schematic flowchart of a method for processing sensor data according to an embodiment of the present invention;
FIG. 5 is a schematic structural diagram of a DOM tree of a web page;
FIG. 6 is a schematic signaling diagram of loading a browser engine with a web page according to an embodiment of the present invention;
FIG. 7 is a schematic signaling diagram of an embodiment of the present invention in an application scenario;
FIG. 8 is a schematic signaling diagram of an embodiment of the present invention in another application scenario; and
FIG. 9 is a schematic structural diagram of a computing node 900 according to an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

FIG. 2 is a schematic diagram of an interaction model according to the present invention. As shown in FIG. 2, the interaction model includes the following steps:
201. A sensor device responds to a user response or an external environment change, and transmits sensor data to an OS in form of an event. The OS may be a common OS or an embedded OS.
202. The OS performs format conversion for the sensor data, preprocesses the sensor data, and transmits the preprocessed data to a Framework layer.
203. The Framework layer checks whether a browser/widget is in a state of being ready for receiving data, and if the browser/widget is in the state of being ready for receiving data, transmits the sensor data to the Browser/Widget. Specifically, the state of being ready for receiving data may be determined according to whether a Browser engine in the Browser/Widget is activated.
A Framework layer may be added or deleted depending on implementation of the OS. The Browser engine is a web application running middleware running on the OS.
204. The Browser engine in the Browser/Widget determines whether a document object model (Document Object Model, DOM for short) node in a web page has corresponding event listening code, and if yes, transmits the sensor data to the corresponding web page.
205. An event processing module on the web page is triggered. If the event listening code includes calling of the sensor device, a sensor module is called, and a response event is generated.
206. The response event is transmitted downstream to the sensor device.
207. The sensor device makes a response.

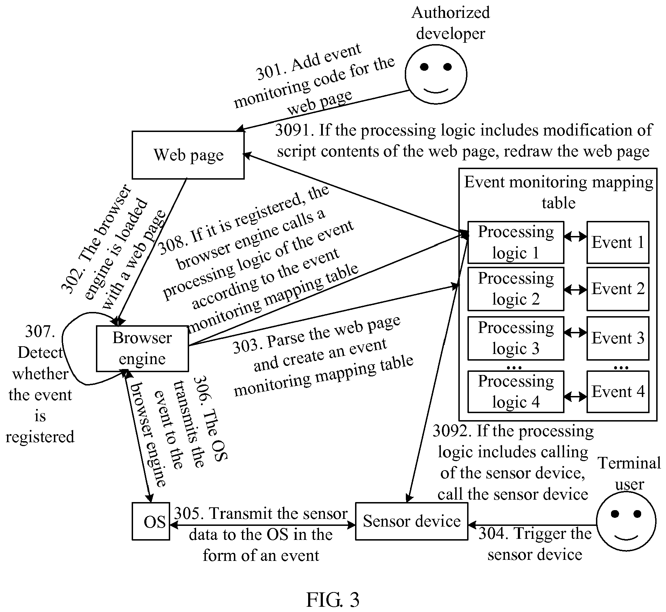

FIG. 3 is a schematic flowchart of an application based on the interaction model shown in FIG. 2. As shown in FIG. 3, the application process specifically includes the following steps:
301. An authorized developer adds event listening code for the web page.

The event listening code herein may also be called event processing logic.

302. The browser engine is loaded with a web page.

303. The browser engine parses the web page and creates an event listening mapping table.

The event listening mapping table includes mapping relationships between events and their processing logic.

304. A terminal user triggers the sensor device.

305. The sensor device transmits the sensor data to the OS in form of an event.

306. The OS transmits the event to the browser engine.

307. The browser engine detects whether the event is registered.

308. If the event is registered, the browser engine calls processing logic of the event according to the event listening mapping table.

3091. If the processing logic includes a modification of script contents of the web page, the web page is redrawn.

For example, to enhance the presentation capability of the web page, a pattern may be designed on the web page, and a color of the pattern represents the current temperature. Correspondingly, processing logic of a temperature change event of a temperature sensor includes code of modifying the color of the pattern according to a temperature parameter. In this way, after the temperature sensor senses a temperature change and reports the temperature parameter, the browser engine calls the processing logic of the temperature change event. In a process of executing the processing logic, the browser engine modifies the color parameter of the pattern in the script contents of the web page, and redraws the web page according to the modified script contents. On the redrawn web page, the color of the pattern corresponds to the temperature parameter sensed by the temperature sensor.

3092. If the processing logic includes calling of the sensor device, the sensor device is called.

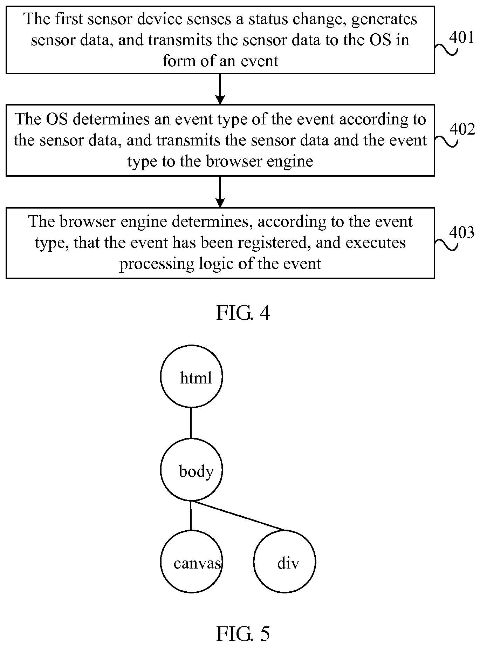

It can be known from the above interaction model that, in the present invention, a web development language may be used to handle the interaction with the sensor device. The web development language runs on a browser engine, and the browser engine shields the difference between different OSs. Therefore, with code being compiled at a single attempt, the compiled application is capable of running on different OSs, thereby enabling an application to run across platform. Besides, upon generation of a system event, the sensor device reports the event immediately so that the processing logic set by the user can respond to the event quickly. For example, the embodiment of the present invention may be implemented using a method shown in FIG. 4.

FIG. 4 is a schematic flowchart of a method for processing sensor data according to an embodiment of the present invention. The method is applied to a computing node such as a mobile phone terminal, a set top box, a personal digital assistant (Personal Digital Assistant, PDA for short), and the like; the computing node includes a hardware layer, an OS running on the hardware layer, and a browser engine running on the OS, where the hardware layer includes a first sensor device. The browser engine may be included in a Browser or a Widget. As shown in FIG. 4, the method includes the following steps:
401. The first sensor device senses a state change, generates sensor data, and transmits the sensor data to the OS in form of an event.

For example, the first sensor device may be an accelerometer, a direction sensor, a 3-axis gyro, a light sensor, a temperature sensor, a touch sensor, and the like. Correspondingly, the state sensed by the first sensor device may be acceleration, direction, motion trace, magnetic field, proximity, light, temperature, touch flick, and the like.

402. The OS determines an event type of the event according to the sensor data, and transmits the sensor data and the event type to the browser engine, where the sensor data is also transmitted to the browser engine in form of an event.

Generally, when being installed on a computing node, an OS scans installed hardware on the computing node automatically and reads corresponding drivers; or, during installing new hardware on the computing node, the OS also scans the new hardware automatically and reads its driver. Specifically, in this embodiment, the OS reads the driver of the first sensor device beforehand to obtain the event type of at least one event corresponding to the first sensor device. In 402, the event type of the event corresponding to the sensor data is determined according to the sensor data.

For example, when the first sensor device is a 3-axis gyro, events may include a direction change event, an acceleration change event, and the like, and the corresponding event type is a direction change event type, an acceleration change event type, a magnetic field change event type, and the like. When sensing a direction change, the 3-axis gyro in 401 generates sensor data inclusive of a direction parameter, and according to the direction parameter included in the sensor data, the OS in 402 determines that the event is a direction change event and that the corresponding event type is a direction change event type.

403. According to the event type, the browser engine determines that the event has been registered, and executes processing logic of the event.

Specifically, the processing logic of the event is added by an authorized developer for the web page (also known as web page) beforehand for the purpose of monitoring state change of the sensor device. Generally, a web page is formed by a DOM tree. Adding processing logic for a web page is actually to add event listening code for a node in the DOM tree of the web page. FIG. 5 is a schematic structural diagram of a DOM tree of a web page. As shown in FIG. 5, a simple web page is formed by four nodes: namely, a Hypertext Markup Language (HTML) node, a body node, a canvas node, and a division (div) node. For example, processing logic of a direction sensor needs to be added for a canvas node, and the processing logic is to display current direction at the div node when the state of the direction sensor changes. It is assumed that an identifier (ID) of the canvas node is canvas 1, and an ID of the div node is div1. The processing logic added for the canvas node is as follows:

```
         <script>
         document.getElementById("canvas1").addEventListner("orientationchanged",
         function(event){
           document.getElementById("div1").innerHTML="direction
           angle: "+event.value[0]+"<br/>"
               +"vertical rotation angle: "+event.value[1]+"<br/>"
               +"horizontal rotation angle: "+event.value[2]+"<br/>";
         })
         </script>
```

where "orientationchanged" represents a direction change event type. When the state of the direction sensor changes, the subsequently registered function (event) is triggered; the function processes a direction parameter transmitted by the event, and displays the current direction angle, vertical rotation angle and horizontal rotation angle at the div node. It should be noted that in practical application, a compass may be drawn on the canvas node by using the sensor data of the direction sensor directly. The description herein is intended to describe the method in the embodiment of the present invention only, and therefore, the current direction information of the terminal is displayed on the div node briefly.

When a web page is loaded into a browser engine, the browser engine obtains node contents of each node in the web page by running and parsing the web page. Correspondingly, in 303, according to previously obtained node contents, the browser engine may determine which node has registered the event. Specifically, the browser engine may be divided into 3 parts: a browser Shell, a web page parsing and rendering engine, and a script parsing engine. Equivalent to a Linux shell, the browser Shell receives an operation performed by the user for the browser interface, and calls the web page parsing and rendering engine and the script parsing engine to react accordingly. For example, when a user clicks a link on the web page, the browser Shell receives a click event of the user, calls the web page parsing and rendering engine to find the clicked website address, and opens a new web page; the web page parsing and rendering engine is responsible for operations such as parsing and rendering the web page; and the script parsing engine is responsible for parsing and executing javascript script code. In an optional embodiment of the present invention, Step 403 specifically includes the following steps:

The browser Shell receives the sensor data and the event type sent by the OS, determines a first web page associated with the event type, and transmits the first web page, the sensor data, and the event type to the web page parsing and rendering engine.

According to the event type, the web page parsing and rendering engine determines that the first node in the first web page has registered the event, and according to the identifier of the first node and the event type, searches out a portal of the processing logic of the event, and calls the script parsing engine to execute the processing logic.

Further, the determining a first web page associated with the event according to the even type and transmitting the first web page, the sensor data, and the event type to the web page parsing and rendering engine specifically includes:
if it is determined that the event is associated with a currently active web page, the currently active web page being a first web page, transmitting the first web page, the sensor data, and the event type to the web page parsing and rendering engine; and
if it is determined that the event is associated with all web pages in run time, each web page in run time being a first web page respectively, transmitting each first web page, the sensor data, and the event type to the web page parsing and rendering engine.

For example, events such as touch flick events and finger tap events are generally associated with the currently active web page only; a direction change event is generally associated with all web pages in run times. All web pages in run time include the currently active web page and web pages that are in run time but not active.

Specifically, the transmitting the first web page by the browser Shell to the web page parsing and rendering engine are specifically: transmitting a pointer of a DOM tree corresponding to the first web page to the web page parsing and rendering engine. The first web page may be any one or more web pages, and the first node may be any one or more nodes in the DOM tree of the first web page.

Further, to enhance the presentation and interaction capabilities of the web page and improve use experience, logic of adjusting presented web page contents according to the sensor data may be embedded into the event processing logic. Correspondingly, the process of calling the script parsing engine to execute the processing logic specifically includes the following operation:

The script parsing engine parses the sensor data and modifies web page contents of the first web page that are stored in the web page parsing and rendering engine.

With the above-mentioned example being used herein, it is assumed that direction sensor processing logic is added at the canvas node. The processing logic is to display the current direction at the div node when the state of the direction sensor changes. When the script parsing engine is triggered by the browser Shell to execute the processing logic function (event), the processing logic processes the sensor data transmitted by the browser Shell, and modifies the div node web page contents stored in the web page parsing and rendering engine according to the direction parameter included in the sensor data. The web page parsing and rendering engine updates the web page according to the modified web page contents, and displays the current direction angle, vertical rotation angle, and horizontal rotation angle at the div node.

Specifically, when the browser Shell transmits the sensor data to the script parsing engine, the sensor data is generally defined by an interface description language (Interface Description Language, IDL for short), and serves as an interface of interaction between javascript and system low-level code. The following is an exemplary interface defined by the IDL:

```
         module events {
           interface [
             Conditional=ORIENTATION_CHANGED_EVENTS
           ] OrientationChangedEvent {
             readonly attribute float value[3];
             void initOrientationChangedEvent(in float value[3]);
           };
         }
```

In another optional embodiment of the present invention, when a web page is loaded into a browser engine, the browser engine can identify the processing logic added at each node of the web page, and register the event corresponding to the processing logic. Specifically, before step 401, the method further includes the following steps:
The web page parsing and rendering engine reads script contents of the first node in the first web page, and calls the script parsing engine to execute the script contents of the first node.

The script parsing engine determines that there is the event type and the processing logic of the event included in the script contents of the first node, and sends the event type and the processing logic of the event to the web page parsing and rendering engine.

The web page parsing and rendering engine transmits the processing logic of the event to the script parsing engine to register the event.

The script parsing engine encapsulates the processing logic, and returns a portal of the processing logic to the web page parsing and rendering engine.

The web page parsing and rendering engine adds the event type of the event and the portal of the processing logic into an event monitoring list of the first node.

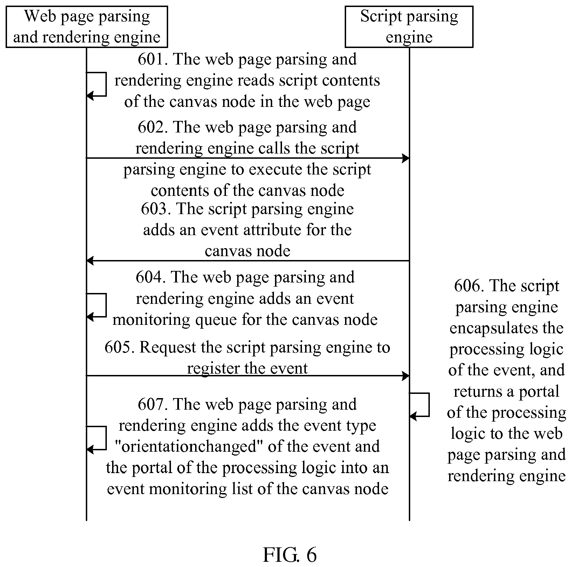

FIG. 6 is a schematic signaling diagram of loading a browser engine with a web page according to an embodiment of the present invention. As shown in FIG. 6, the above-mentioned example is still used herein, and the following steps are included:
601. The web page parsing and rendering engine reads script contents of the canvas node in the web page.
602. The web page parsing and rendering engine calls the script parsing engine to execute the script contents of the canvas node.
603. The script parsing engine adds an event attribute for the canvas node.

Specifically, when executing the script contents of the canvas node, the script parsing engine determines that there is the event type and the processing logic of the event included in the script contents of the canvas node, and sends the event type "orientationchanged" and the processing logic function (event) of the event to the web page parsing and rendering engine.

604. The web page parsing and rendering engine adds an event monitoring list for the canvas node.

605. Request the script parsing engine to register the event.

Specifically, the web page parsing and rendering engine transmits the processing logic of the event to the script parsing engine.

606. The script parsing engine encapsulates the processing logic, and returns a portal of the processing logic to the web page parsing and rendering engine.

Specifically, the portal of the processing logic may be an address for storing the processing logic.

607. The web page parsing and rendering engine adds the event type "orientationchanged" of the event and the portal of the processing logic into an event monitoring list of the canvas node.

Specifically, after 607, the script parsing engine may continue to execute the script contents of the canvas node. When it is determined that the script contents of the canvas node include other processing logic, 603-607 can still be performed. Because the event monitoring list of the canvas node is already created, 605 does not need to be repeated. When the script parsing engine finishes executing the script contents of the canvas node, the web page parsing and rendering engine continues to read script contents of other nodes on the web page, and calls the script parsing engine to execute the script contents.

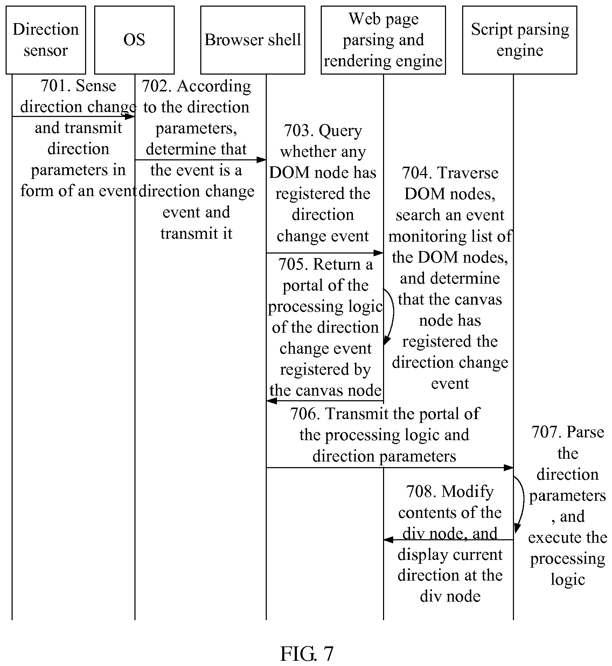

FIG. 7 is a schematic signaling diagram of an embodiment of the present invention in an application scenario. In this application scenario, processing logic of the above-mentioned direction sensor is added for the canvas node, and the processing logic is to display current direction at the div node when the state of the direction sensor changes. As shown in FIG. 7, a signaling process specifically includes the following steps:
701. The direction sensor senses direction change and transmits direction parameters to the OS in form of an event.
702. According to the direction parameters, the OS determines that the event is a direction change event and transmits the event to a browser Shell.
703. The browser Shell queries the web page parsing and rendering engine as to whether any DOM node has registered the direction change event.
704. The web page parsing and rendering engine traverses DOM nodes, searches an event monitoring list of the DOM nodes, and determines that the canvas node has registered the direction change event.
705. The web page parsing and rendering engine returns to the browser Shell a portal of the processing logic of the direction change event registered by the canvas node.
706. The browser Shell transmits the portal of the processing logic and the direction parameters to the script parsing engine.
707. The script parsing engine parses the direction parameters and executes the processing logic.
708. The script parsing engine modifies the div node contents stored in the web page parsing and rendering engine to display the current direction at the div node.

In another optional embodiment of the present invention, when a web page is loaded into a browser engine, the browser engine may perform parsing to obtain an attribute defined at each node of the web page, and register the event corresponding to an event attribute if the attribute is the event attribute. Specifically, before 401, the following steps are included:
parsing, by the web page parsing and rendering engine, the first web page and determining that there is an event attribute defined for the first node in the first web page;
determining the event type and processing logic of the event corresponding to the event attribute;
transmitting the processing logic of the event to the script parsing engine to register the event;
encapsulating, by the script parsing engine, the processing logic, and returning a portal of the processing logic to the web page parsing and rendering engine; and
adding, by the web page parsing and rendering engine, the event type of the event and the portal of the processing logic into an event monitoring list of the first node.

Further, the determining, by the web page parsing and rendering engine according to the event type, that the first node in the first web page has registered the event specifically includes:
determining, by the web page parsing and rendering engine, that the event is independent of location according to the event type, traversing an event monitoring list of each node, and determining that there is the event type of the event included in the event monitoring list of the first node.

Optionally, the determining, by the web page parsing and rendering engine according to the event type, that the first node in the first web page has registered the event specifically includes:
determining, by the web page parsing and rendering engine, that the event is dependent on location according to the event type, and parsing location information from the sensor data;
determining a first node which is matched with the location information and in the first web page according to the location information; and
determining that there is the event type of the event included in the event monitoring list of the first node.

Specifically, whether the event is dependent on or independent of the location may be determined according to the event type. Generally, environment change sensing events are independent of location, for example, a direction change event, a temperature change event, and the like; touch sensing events are dependent on location, for example, a touch flick event, a finger tap event, and the like. For example, multiple nodes on a web page are located in different positions on the web page, and have all registered a touch flick event. The touch sensor generates sensor data when sensing a touch flick of the user. The sensor data includes location information arising from the touch flick, flick parameters, and the like. The web page parsing and rendering engine determines that the event is dependent on location according to the event type, parses the location information in the sensor data, and determines which node in the web page matches the location information, that is, on which node the touch flick occurs, and then determines whether the matched node has registered the touch flick event, and if yes, sends an identifier of the matched node to the browser Shell.

Because the registered event is bound to a DOM node, in responding to an event of the sensor device, it is necessary to traverse the DOM tree to find which DOM node has registered the event of the sensor device. If the DOM tree has many nodes and the depth of the tree is rather great, the traverse is performed at a high cost. Therefore, optimization may be performed by setting up a global event management Hash (Hash) table for the DOM tree to facilitate search in responding to events. In such an application scenario, after the web page parsing and rendering engine adds the portal of the processing logic returned by the script parsing engine and the event type of the event into the event monitoring list of the first node, the following step is included:
the web page parsing and rendering engine adds an identifier of the first node and the event type of the event into an event management Hash table.

The determining, by the web page parsing and rendering engine according to the event type, that the first node in the first web page has registered the event specifically includes:
the web page parsing and rendering engine queries the Hash table and determines that there is the event type of the event included in a table entry corresponding to the identifier of the first node.

Specifically, the format of the event management Hash table may be <key, value>, where key is the event type of the event, and value is a DOM node array of the event. The DOM node array may include identifiers of multiple DOM nodes that have registered the event at the same time. Further, an event registration managing module may be added, where the event registration managing module is responsible for event registration management. In specific implementation, it may be a submodule of the web page parsing and rendering engine. Correspondingly, after the signaling process 607 shown in FIG. 6, the following steps are included:
the web page parsing and rendering engine adds the identifier of the first node and the event type of the event into an event management Hash table stored by the event registration managing module.

In application, it is possible that multiple nodes have registered events of the same event type. The web page parsing and rendering engine may send identifiers and event types of the multiple nodes to the browser Shell at the same time, and the browser Shell sends the identifiers, event types and sensor data of the multiple nodes to the web page parsing and rendering engine. According to the identifiers and event types of the multiple nodes, the web page parsing and rendering engine respectively finds a portal of the processing logic of the event registered by each node, and calls the script parsing engine to respectively execute the processing logic of the event registered by the multiple nodes. The events of the same event type, which are registered by different nodes, may have different processing logic.

Further, some types of sensor devices may feed back in response to an instruction of the user. In another optional embodiment of the present invention, the browser engine may respond to the event and operate the sensor device. Specifically, the processing logic of the reported event includes a portal of calling a sensing method of a second sensor device, and the calling the script parsing engine to execute the processing logic of the event specifically includes:
the script parsing engine calls the sensing method of the second sensor device according to the portal of calling.

Specifically, the second sensor device is a sensor device that has a callable sensing method, and may be the same type as or a different type from the first sensor device. Generally, an authorized developer adds a portal of calling the sensing method of the second sensor device into the processing logic of an event of a specific node beforehand. A force feedback sensor in game applications is taken as an example herein. For example, in a baseball game, the force feedback sensor may transmit parameters such as direction and force of a joystick to the browser engine in form of events. In the event processing logic designed by the authorized developer, a vibration method of the force feedback sensor is called as triggered when a contact between the bat and the ball simulated by the joystick is determined according to the sensor data reported by the force feedback sensor, so as to let the user have a feeling of true batting. In this way, when the script parsing engine executes the processing logic of the event, if a contact between the bat and the ball simulated by the joystick is determined according to the sensor data reported by the force feedback sensor, the vibration method of the force feedback sensor is called according to the portal of calling the vibration method of the force feedback sensor, where the portal is included in the processing logic. Specifically, the script parsing engine may use a browser Shell and an OS to call the sensing method of the second sensor device according to the portal of calling.

Further, if the sensing method of the sensor device needs to be called, it is generally necessary to register the sensing method onto the script parsing engine first. Correspondingly, before 401, the following steps are included:
the browser Shell obtains, from the OS, the portal of calling the sensing method of the second sensor device;
the browser Shell sends the portal of calling the sensing method of the second sensor device to the script parsing engine; and
the script parsing engine stores the portal of calling the sensing method of the second sensor device.

Specifically, the OS may obtain, from a driver of the second sensor device, the portal of calling the sensing method of the second sensor device, and store it. The script parsing engine stores the portal of calling the sensing method of the second sensor device, that is, after the sensing method is registered, the authorized developer can quote the calling portal in code.

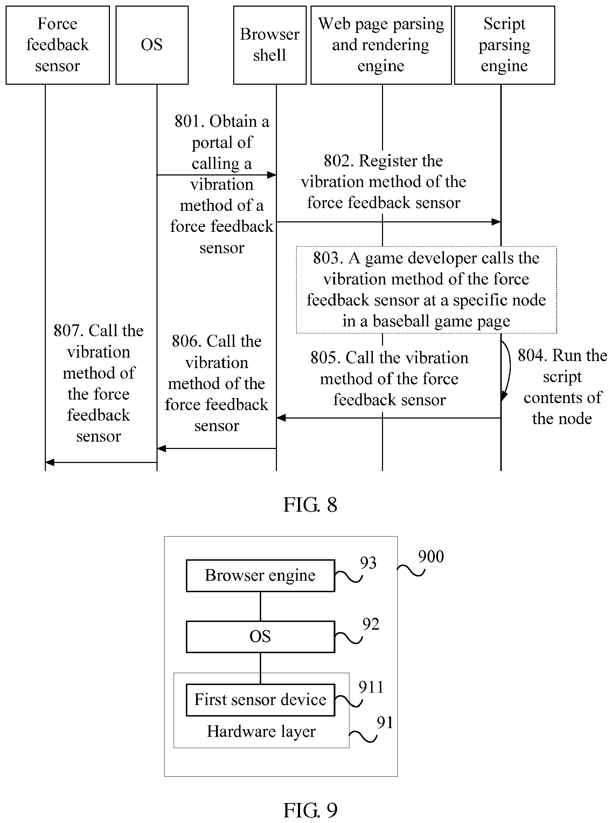

FIG. 8 is a schematic signaling diagram of an embodiment of the present invention in another application scenario. In this application scenario, the force feedback sensor may produce vibration to let the user have a feeling of true batting. As shown in FIG. 8, a signaling process specifically includes the following steps:
801. A browser Shell obtains, from an OS, a portal of calling a vibration method of a force feedback sensor.
802. The browser Shell registers the vibration method of the force feedback sensor onto a script parsing engine.
803. A game developer calls the vibration method of the force feedback sensor at a specific node in a baseball game page.

Specifically, the node has registered a force change event of the force feedback sensor. That is, script contents of the node include processing logic of the force change event, and the processing logic of the force change event includes a portal of calling the vibration method of the force feedback sensor.

804. The script parsing engine runs the script contents of the node.

Specifically, 804 may be: The script parsing engine executes the processing logic of the force change event based on the force change event transmitted by the force feedback sensor, where the processing logic is included in the script contents of the node.

805. The script parsing engine calls the vibration method of the force feedback sensor from the browser Shell.

806. The browser Shell calls the vibration method of the force feedback sensor from the OS.

807. The OS calls the vibration method of the force feedback sensor.

The embodiment of the present invention adopts such a technique: a sensor device senses a state change, generates sensor data, and transmits the sensor data to an OS in form of an event; the OS determines the event type of the event, and transmits the sensor data and the event type to a browser engine; according to the event type, the browser engine determines that the event has been registered, and executes processing logic of the event. In this way, the browser engine shields difference between different OSs, and solves, to some extent, a problem that an application cannot run across platform due to a direct interaction between a native application and a sensor device in the prior art; with code written only once, the written application is capable of running on different OSs, thereby enabling an application to run across platform. Further, the user logic can interact with the sensor device, and the sensor device not only serves as a unidirectional input source of information, but also responds to the operation of the user. Specifically, logic of responding to/operating the sensor device is embedded into compiled web page code to simplify development.

Persons of ordinary skill in the art may understand that all or part of the steps in each of the foregoing method embodiments may be implemented by a program instructing relevant hardware. The program may be stored in a computer readable storage medium. When the program is run, the steps of the forgoing methods in the embodiments are performed. The storage medium includes any medium that is capable of storing program code, such as a ROM, a RAM, a magnetic disk, or an optical disk.

FIG. 9 is a schematic structural diagram of a computing node 900 according to an embodiment of the present invention. As shown in FIG. 9, the computing node 900 includes:
a hardware layer 91, an OS 92 running on the hardware layer 91, and a browser engine 93 running on the OS 92, where the hardware layer 91 includes a first sensor device 911;
the first sensor device 911 is configured to sense a state change, generate sensor data, and transmit the sensor data to the OS 92 in form of an event;
the OS 92 is configured to determine an event type of the event according to the sensor data, and transmit the sensor data and the event type to the browser engine 93, where the sensor data is also transmitted to the browser engine 93 in form of an event; and
the browser engine 93 is configured to determine, according to the event type, that the event has been registered, and execute processing logic of the event.

In an optional embodiment of the present invention, the browser engine 93 includes a browser Shell, a web page parsing and rendering engine, and a script parsing engine.

The browser Shell is configured to receive the sensor data and the event type sent by the OS, determine a first web page associated with the event according to the event type, and transmit the first web page, the sensor data, and the event type to the web page parsing and rendering engine.

The web page parsing and rendering engine is configured to determine, according to the event type, that the first node in the first web page has registered the event, search out, according to the identifier of the first node and the event type, a portal of the processing logic of the event, and call the script parsing engine.

The script parsing engine is configured to execute the processing logic of the event.

Further, the browser Shell is specifically configured to:
if it is determined that the event is associated with a currently active web page, the currently active web page being a first web page, transmit the first web page, the sensor data, and the event type to the web page parsing and rendering engine; and
if it is determined that the event is associated with all web pages in run time, each web page in run time being a first web page respectively, transmit each first web page, the sensor data, and the event type to the web page parsing and rendering engine.

In another optional embodiment of the present invention, the web page parsing and rendering engine is further configured to read script contents of the first node in the first web page and call the script parsing engine before the first sensor device senses the state change and generates the sensor data.

The script parsing engine is further configured to execute the script contents of the first node, determine that there is the event type and the processing logic of the event included in the script contents of the first node, and send the event type and the processing logic of the event to the web page parsing and rendering engine.

The web page parsing and rendering engine is further configured to transmit the processing logic of the event to the script parsing engine to register the event.

The script parsing engine is further configured to encapsulate the processing logic, and return a portal of the processing logic to the web page parsing and rendering engine.

The web page parsing and rendering engine is further configured to add the event type of the event and the portal of the processing logic into an event monitoring list of the first node.

In another optional embodiment of the present invention, the web page parsing and rendering engine is further configured to:
parse the first web page before the first sensor device senses the state change and generates the sensor data, and determine that there is an event attribute defined for the first node in the first web page;
determine the event type and processing logic of the event corresponding to the event attribute; and
transmit the processing logic of the event to the script parsing engine to register the event.

The script parsing engine is further configured to encapsulate the processing logic, and return a portal of the processing logic to the web page parsing and rendering engine.

The web page parsing and rendering engine is further configured to add the event type of the event and the portal of the processing logic into an event monitoring list of the first node.

Further, the web page parsing and rendering engine is also configured to determine, according to the event type, that the first node in the first web page has registered the event, where the determining, according to the event type, that the first node in the first web page has registered the event specifically includes:
determining that the event is independent of location according to the event type, traversing an event monitoring list of each node in the first web page, and determining that there is the event type of the event included in the event monitoring list of the first node.

Optionally, the web page parsing and rendering engine is configured to determine, according to the event type, that the first node in the first web page has registered the event, where the determining, according to the event type, that the first node in the first web page has registered the event specifically includes:
determining that the event is dependent on location according to the event type, and parsing location information from the sensor data;
determining a first node which is matched with the location information and in the first web page according to the location information; and
determining that there is the event type of the event included in the event monitoring list of the first node.

In another optional embodiment of the present invention, the web page parsing and rendering engine is further configured to:
add an identifier of the first node and the event type of the event into an event management Hash table after the event type of the event and the portal of the processing logic returned by the script parsing engine are added into the event monitoring list of the first node;

The web page parsing and rendering engine is configured to search out the portal of the processing logic of the event according to the identifier of the first node and the event type, where the searching out the portal of the processing logic of the event according to the identifier of the first node and the event type specifically includes:
querying the Hash table and determining that there is the event type of the event included in a table entry corresponding to the identifier of the first node.

In another optional embodiment of the present invention, the script parsing engine is specifically configured to parse the sensor data and modify web page contents of the first web page that are stored in the web page parsing and rendering engine.

In another optional embodiment of the present invention, the hardware layer 91 further includes a second sensor device, where the processing logic of the event includes a portal of calling a sensing method of the second sensor device, and the script parsing engine is specifically configured to:
call the sensing method of the second sensor device according to the portal of calling.

Further, the browser Shell is further configured to:
obtain, from an OS, the portal of calling the sensing method of the second sensor device before the first sensor device senses the state change and generates the sensor data; and
send the portal of calling the sensing method of the second sensor device to the script parsing engine.

The script parsing engine is further configured to store the portal of calling the sensing method of the second sensor device.

The computing node provided in the embodiment of the present invention may be a mobile phone, a PDA, a set top box, a handheld device in a specific field, and the like.

The embodiment of the present invention adopts such a technique: a sensor device senses a state change, generates sensor data, and transmits the sensor data to an OS in form of an event; the OS determines the event type of the event, and transmits the sensor data and the event type to a browser engine; according to the event type, the browser engine determines that the event has been registered, and executes processing logic of the event. In this way, the browser engine shields difference between different OSs, and solves, to some extent, a problem that an application cannot run across platform due to a direct interaction between a native application and a sensor device in the prior art; with code written only once, the written application is capable of running on different OSs, thereby enabling an application to run across platform. Further, the user logic can interact with the sensor device, and the sensor device not only serves as a unidirectional input source of information, but also responds to the operation of the user. Specifically, logic of responding to/operating the sensor device is embedded into compiled web page code to simplify development.

It should be noted that, the expression of first and second used in the descriptions of the foregoing embodiments is not intended to limit a sequence, but is only for convenience of distinguishing.

Finally, it should be noted that the foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as such modifications or replacements do not cause the essence of corresponding technical solutions to depart from the scope of the technical solutions of the embodiments of the present invention.

## Claims

1. A method for processing sensor data, applied to a computing node, wherein the computing node comprises a hardware layer, an operating system, OS running on the hardware layer, and a browser engine running on the OS, wherein the hardware layer comprises a first sensor device, and **characterized in that** the method comprises:
sensing (401), by the first sensor device, a state change, generating sensor data, and transmitting (305) the sensor data to the OS in form of an event;
determining (402), by the OS, an event type of the event according to the sensor data, and transmitting (306) the sensor data and the event type to the browser engine, wherein the sensor data is also transmitted to the browser engine in form of an event; and
determining (307, 403), by the browser engine, according to the event type, that the event has been registered, and executing (308) a processing logic of the event; wherein the processing logic of the event is event listening code, and the processing logic of the event is added by an authorized developer for a node in a DOM, Document Object Model, tree of an web page beforehand for the purpose of monitoring state change of the first sensor device; wherein the web page is formed by the DOM tree;
wherein the browser engine comprises a browser Shell, a web page parsing and rendering engine, and a script parsing engine, and the determining, by the browser engine according to the event type, that the event has been registered, and executing processing logic of the event comprises:
receiving, by the browser Shell, the sensor data and the event type transmitted by the OS, determining a first web page associated with the event according to the event type, and transmitting the first web page, the sensor data, and the event type to the web page parsing and rendering engine, wherein the sensor data is transmitted by the OS in form of an event; and
determining, by the web page parsing and rendering engine, according to the event type, that a first node has registered the event, and searching out, according to an identifier of the first node and the event type, a portal of the processing logic of the event, and calling the script parsing engine to execute the processing logic of the event; wherein the first node is one or more nodes in the DOM tree of a first web page, the portal of the processing logic of the event is an address for storing the processing logic of the event;
wherein the processing logic of the event comprises a portal of calling a sensing method of a second sensor device, and the calling the script parsing engine to execute the processing logic of the event specifically comprises:
calling, by the script parsing engine, the sensing method of the second sensor device according to the portal of calling the sensing method of the second sensor device, wherein the portal of calling the sensing method of the second sensor device is added into the processing logic of the event by the authorized developer beforehand.

2. The method according to claim 1, wherein:
the determining a first web page associated with the event according to the event type, and transmitting the first web page, the sensor data, and the event type to the web page parsing and rendering engine specifically comprise:
if it is determined that the event is associated with a currently active web page, the currently active web page being a first web page, transmitting the first web page, the sensor data, and the event type to the web page parsing and rendering engine; and
if it is determined that the event is associated with all web pages in run time, each web page in run time being a first web page respectively, transmitting each first web page, the sensor data, and the event type to the web page parsing and rendering engine; wherein the all web pages in run time include the currently active web page and web pages that are in run time but not active.

3. The method according to claim 1, wherein: before sensing, by the first sensor device, the state change and generating the sensor data, the method further comprises:
reading, by the web page parsing and rendering engine, script contents of the first node in the first web page, and calling the script parsing engine to execute the script contents of the first node;
determining, by the script parsing engine, that there is the event type of the event and the processing logic of the event comprised in the script contents of the first node, and transmitting the event type of the event and the processing logic of the event to the web page parsing and rendering engine;
transmitting, by the web page parsing and rendering engine, the processing logic of the event to the script parsing engine to register the event;
encapsulating, by the script parsing engine, the processing logic, and returning a portal of the processing logic to the web page parsing and rendering engine; and
adding, by the web page parsing and rendering engine, the event type of the event and the portal of the processing logic into an event monitoring list of the first node.

4. The method according to claim 1, wherein: before the first sensor device senses the state change and generates the sensor data, the method further comprises:
parsing, by the web page parsing and rendering engine, the first web page and determining that there is an event attribute defined for the first node in the first web page;
determining the event type and processing logic of the event corresponding to the event attribute;
transmitting the processing logic of the event to the script parsing engine to register the event;
encapsulating, by the script parsing engine, the processing logic, and returning a portal of the processing logic to the web page parsing and rendering engine; and
adding, by the web page parsing and rendering engine, the event type of the event and the portal of the processing logic into an event monitoring list of the first node.

5. The method according to claim 3 or 4, wherein: after the web page parsing and rendering engine adds the portal of the processing logic returned by the script parsing engine and the event type of the event into the event monitoring list of the first node, the method further comprises:
adding, by the web page parsing and rendering engine, an identifier of the first node and the event type of the event into an event management Hash table; and
the determining, by the web page parsing and rendering engine according to the event type, that the first node in the first web page has registered the event comprises:
querying, by the web page parsing and rendering engine, the Hash table and determining that there is the event type of the event comprised in a table entry corresponding to the identifier of the first node.

6. The method according to claim 1, wherein the calling the script parsing engine to execute the processing logic of the event specifically comprises:
parsing, by the script parsing engine, the sensor data and modifying web page contents of the first web page that are stored in the web page parsing and rendering engine.

7. A computing node (900), comprising a hardware layer (91), an operating system, OS, (92) running on the hardware layer (91), and a browser engine (93) running on the OS (92), wherein the hardware layer (91) comprises a first sensor device (911); **characterized in that**:
the first sensor device (911) is configured to sense a state change, generate sensor data, and transmit the sensor data to the OS (92) in form of an event;
the OS (92) is configured to determine an event type of the event according to the sensor data, and transmit the sensor data and the event type to the browser engine (93), wherein the sensor data is also transmitted to the browser engine (93) in form of an event; and
the browser engine (93) is configured to determine, according to the event type, that the event has been registered, and execute processing logic of the event; wherein the processing logic of the event is event listening code, and the processing logic of the event is added by an authorized developer for a node in a DOM, Document Object Model, tree of an web page beforehand for the purpose of monitoring state change of the first sensor device; wherein the web page is formed by the DOM tree;
wherein the browser engine (93) comprises a browser Shell, a web page parsing and rendering engine, and a script parsing engine; wherein:
the browser Shell is configured to receive the sensor data and the event type transmitted by the OS, determine a first web page associated with the event according to the event type, and transmit the first web page, the sensor data, and the event type to the web page parsing and rendering engine;
the web page parsing and rendering engine is configured to determine, according to the event type, that a first node has registered the event, search out, according to the identifier of the first node and the event type, a portal of the processing logic of the event, and call the script parsing engine; wherein the first node is one or more nodes in the DOM tree of a first web page, the portal of the processing logic of the event is an address for storing the processing logic of the event; and
the script parsing engine is configured to execute the processing logic of the event;
wherein the terminal further comprises a second sensor device, wherein the processing logic of the event comprises a portal of calling a sensing method of the second sensor device, the portal of calling the sensing method of the second sensor device is added into the processing logic of the event by the authorized developer beforehand, and the script parsing engine is specifically configured to:
call the sensing method of the second sensor device according to the portal of calling the sensing method of the second sensor device.

8. The computing node according to claim 7, wherein the browser Shell is specifically configured to:
receive the sensor data and the event type transmitted by the OS;
if it is determined that the event is associated with a currently active web page, the currently active web page being a first web page, transmit the first web page, the sensor data, and the event type to the web page parsing and rendering engine; and
if it is determined that the event is associated with all web pages in run time, each web page in run time being a first web page respectively, transmit each first web page, the sensor data, and the event type to the web page parsing and rendering engine; wherein the all web pages in run time include the currently active web page and web pages that are in run time but not active.

9. The computing node according to claim 7, wherein:
the web page parsing and rendering engine is further configured to read script contents of the first node in the first web page and call the script parsing engine before the first sensor device senses the state change and generates the sensor data;
the script parsing engine is further configured to execute the script contents of the first node, determine that there is the event type and the processing logic of the event comprised in the script contents of the first node, and transmit the event type of the event and the processing logic of the event to the web page parsing and rendering engine;
the web page parsing and rendering engine is further configured to transmit the processing logic of the event to the script parsing engine to register the event;
the script parsing engine is further configured to encapsulate the processing logic, and return a portal of the processing logic to the web page parsing and rendering engine; and
the web page parsing and rendering engine is further configured to add the event type of the event and the portal of the processing logic into an event monitoring list of the first node.

10. The computing node according to claim 7, wherein the web page parsing and rendering engine is further configured to:
parse the first web page before the first sensor device senses the state change and generates the sensor data, and determine that there is an event attribute defined for the first node in the first web page;
determine the event type and processing logic of the event corresponding to the event attribute;
transmit the processing logic of the event to the script parsing engine to register the reported event;
the script parsing engine is further configured to encapsulate the processing logic, and return a portal of the processing logic to the web page parsing and rendering engine; and
the web page parsing and rendering engine is further configured to add the event type of the event and the portal of the processing logic into an event monitoring list of the first node.

11. The computing node according to claim 9 or claim 10, wherein the web page parsing and rendering engine is further configured to:
add an identifier of the first node and the event type of the event into an event management Hash table after the portal of the processing logic returned by the script parsing engine and the event type of the event are added into the event monitoring list of the first node; and
query the Hash table and determine that there is the event type of the event comprised in a table entry corresponding to the identifier of the first node.

12. The computing node according to claim 7, wherein
the script parsing engine is specifically configured to parse the sensor data and modify web page contents of the first web page that are stored in the web page parsing and rendering engine.

## Patentansprüche

1. Verfahren zum Verarbeiten von Sensordaten, angewandt auf einen Rechnerknoten, wobei der Rechnerknoten eine Hardware-Schicht, ein Betriebssystem, OS, das auf der Hardware-Schicht ausgeführt wird, und eine Browser-"Engine", die auf dem OS ausgeführt wird, umfasst, wobei die Hardware-Schicht eine erste Sensorvorrichtung umfasst, und **dadurch gekennzeichnet, dass** das Verfahren umfasst:
Erfassen (401), durch die erste Sensorvorrichtung, einer Zustandsänderung, Erzeugen von Sensordaten und Übertragen (305) der Sensordaten in der Form eines Ereignisses an das OS;
Bestimmen (402), durch das OS, eines Ereignistyps des Ereignisses gemäß den Sensordaten und Übertragen (306) der Sensordaten und des Ereignistyps an die Browser-"Engine", wobei die Sensordaten ebenfalls in der Form eines Ereignisses an die Browser-"Engine" übertragen werden; und
Bestimmen (307, 403), durch die Browser-"Engine", gemäß dem Ereignistyp, dass das Ereignis registriert wurde, und Ausführen (308) einer Verarbeitungslogik des Ereignisses; wobei die Verarbeitungslogik des Ereignisses Ereignislauschcode ist und die Verarbeitungslogik des Ereignisses durch einen autorisierten Entwickler für einen Knoten in einen Dokumentobjektmodell- bzw. DOM-Baum einer Webseite im Voraus zum Zweck der Überwachung einer Zustandsänderung der ersten Sensorvorrichtung hinzugefügt wird; wobei die Webseite durch den DOM-Baum gebildet wird;
wobei die Browser-"Engine" eine Browser-Shell, eine Webseiten-Parsing-und -Aufbereitung-"Engine" und eine Skript-Parsing-"Engine" umfasst und wobei das Bestimmen, durch die Browser-"Engine", gemäß dem Ereignistyp, dass das Ereignis registriert wurde, und das Ausführen der Verarbeitungslogik des Ereignisses umfasst:
Empfangen, durch die Browser-Shell, der Sensordaten und des Ereignistyps, übertragen vom OS, Bestimmen einer ersten Webseite, die mit dem Ereignis assoziiert ist,
gemäß dem Ereignistyp und Übertragen der ersten Webseite, der Sensordaten und des Ereignistyps an die Webseiten-Parsing- und -Aufbereitung-"Engine", wobei die Sensordaten vom OS in der Form eines Ereignisses übertragen werden; und
Bestimmen, durch die Webseiten-Parsing- und -Aufbereitung-"Engine", gemäß dem Ereignistyp, dass ein erster Knoten das Ereignis registriert hat, und Ausfindigmachen,
gemäß einer Kennung des ersten Knotens und dem Ereignistyp, eines Portals der Verarbeitungslogik des Ereignisses und Aufrufen der Skript-Parsing-"Engine", die Verarbeitungslogik des Ereignisses auszuführen; wobei der erste Knoten ein oder mehrere Knoten in dem DOM-Baum einer ersten Webseite ist, wobei das Portal der Verarbeitungslogik des Ereignisses eine Adresse zum Speichern der Verarbeitungslogik des Ereignisses ist;
wobei die Verarbeitungslogik des Ereignisses ein Portal zum Aufrufen eines Erfassungsverfahrens einer zweiten Sensorvorrichtung umfasst und wobei das Aufrufen der Skript-Parsing-"Engine" zum Ausführen der Verarbeitungslogik des Ereignisses spezifisch umfasst:
Aufrufen, durch die Skript-Parsing-"Engine", des Erfassungsverfahrens der zweiten Sensorvorrichtung gemäß dem Portal zum Aufrufen des Erfassungsverfahrens der zweiten Sensorvorrichtung, wobei das Portal zum Aufrufen des Erfassungsverfahrens der zweiten Sensorvorrichtung in die Verarbeitungslogik des Ereignisses im Voraus durch den autorisierten Entwickler hinzugefügt wird.

2. Verfahren nach Anspruch 1, wobei:
das Bestimmen einer ersten Webseite, die mit dem Ereignis gemäß dem Ereignistyp assoziiert ist, und das Übertragen der ersten Webseite, der Sensordaten und des Ereignistyps an die Webseiten-Parsing- und -Aufbereitung-"Engine" spezifisch umfasst:
wenn bestimmt wird, dass das Ereignis mit einer gegenwärtig aktiven Webseite assoziiert ist, wobei die gegenwärtig aktive Webseite eine erste Webseite ist, Übertragen der ersten Webseite, der Sensordaten und des Ereignistyps an die Webseiten-Parsingund -Aufbereitung-"Engine"; und
wenn bestimmt wird, dass das Ereignis mit allen Webseiten in der Laufzeit assoziiert ist, wobei jede Webseite in der Laufzeit jeweils eine erste Webseite ist, Übertragen jeder ersten Webseite, der Sensordaten und des Ereignistyps an die Webseiten-Parsingund -Aufbereitung-"Engine"; wobei die sämtlichen Webseiten in der Laufzeit die gegenwärtig aktive Webseite und Webseiten, die in der Laufzeit sind, aber nicht aktiv sind, enthalten.

3. Verfahren nach Anspruch 1, wobei das Verfahren vor dem Erfassen, durch die erste Sensorvorrichtung, der Zustandsänderung und dem Erzeugen der Sensordaten ferner umfasst:
Lesen, durch die Webseiten-Parsing- und -Aufbereitung-"Engine", von Skriptinhalten des ersten Knotens in der ersten Webseite und Aufrufen der Skript-Parsing-"Engine",
die Skriptinhalte des ersten Knotens auszuführen;
Bestimmen, durch die Skript-Parsing-"Engine", dass der Ereignistyp des Ereignisses und die Verarbeitungslogik des Ereignisses in den Skriptinhalten des ersten Knotens vorhanden sind, und Übertragen des Ereignistyps des Ereignisses und der Verarbeitungslogik des Ereignisses an die Webseiten-Parsing- und -Aufbereitung-"Engine";
Übertragen, durch die Webseiten-Parsing- und -Aufbereitung-"Engine", der Verarbeitungslogik des Ereignisses an die Skript-Parsing-"Engine", um das Ereignis zu registrieren;
Verkapseln, durch die Skript-Parsing-"Engine", der Verarbeitungslogik und Zurücksenden eines Portals der Verarbeitungslogik an die Webseiten-Parsingund -Aufbereitung-"Engine"; und
Hinzufügen, durch die Webseiten-Parsing- und -Aufbereitung-"Engine", des Ereignistyps des Ereignisses und des Portals der Verarbeitungslogik in eine Ereignis-Überwachungsliste des ersten Knotens.

4. Verfahren nach Anspruch 1, wobei das Verfahren, bevor die erste Sensorvorrichtung die Zustandsänderung erfasst und die Sensordaten erzeugt, ferner umfasst:
Parsen, durch die Webseiten-Parsing- und -Aufbereitung-"Engine", der ersten Webseite und Bestimmen, dass ein für den ersten Knoten definiertes Ereignisattribut in der ersten Webseite vorhanden ist;
Bestimmen des Ereignistyps und der Verarbeitungslogik des Ereignisses korrespondierend mit dem Ereignisattribut;
Übertragen der Verarbeitungslogik des Ereignisses an die Skript-Parsing-"Engine",
um das Ereignis zu registrieren;
Verkapseln, durch die Skript-Parsing-"Engine", der Verarbeitungslogik und Zurücksenden eines Portals der Verarbeitungslogik an die Webseiten-Parsing-und -Aufbereitung-"Engine"; und
Hinzufügen, durch die Webseiten-Parsing- und -Aufbereitung-"Engine", des Ereignistyps des Ereignisses und des Portals der Verarbeitungslogik in eine Ereignis-Überwachungsliste des ersten Knotens.

5. Verfahren nach Anspruch 3 oder 4, wobei das Verfahren, nachdem die Webseiten-Parsing- und -Aufbereitung-"Engine" das von der Skript-Parsing-"Engine" zurückgesandte Portal der Verarbeitungslogik und den Ereignistyp des Ereignisses in die Ereignis-Überwachungsliste des ersten Knotens hinzufügt, ferner umfasst:
Hinzufügen, durch die Webseiten-Parsing- und -Aufbereitung-"Engine", einer Kennung des ersten Knotens und des Ereignistyps des Ereignisses in eine Ereignisverwaltung-Hashtabelle; und
wobei das Bestimmen, durch die Webseiten-Parsing- und -Aufbereitung-"Engine" gemäß dem Ereignistyp, dass der erste Knoten in der ersten Webseite das Ereignis registriert hat, umfasst:
Abfragen, durch die Webseiten-Parsing- und -Aufbereitung-"Engine", der Hashtabelle und Bestimmen, dass der Ereignistyp des Ereignisses in einem Tabelleneintrag korrespondierend mit der Kennung des ersten Knotens vorhanden ist.

6. Verfahren nach Anspruch 1, wobei das Aufrufen der Skript-Parsing-"Engine" zum Ausführen der Verarbeitungslogik des Ereignisses spezifisch umfasst:
Parsen, durch die Skript-Parsing-"Engine", der Sensordaten und Modifizieren von Webseiteninhalten der ersten Webseite, die in der Webseiten-Parsing-und -Aufbereitung-"Engine" gespeichert sind.

7. Rechnerknoten (900), umfassend eine Hardware-Schicht (91), ein Betriebssystem, OS, (92) das auf der Hardware-Schicht (91) ausgeführt wird, und eine Browser-"Engine" (93), die auf dem OS (92) ausgeführt wird, wobei die Hardware-Schicht (91) eine erste Sensorvorrichtung (911) umfasst, **dadurch gekennzeichnet, dass**:
die erste Sensorvorrichtung (911) konfiguriert ist zum Erfassen einer Zustandsänderung, Erzeugen von Sensordaten und Übertragen der Sensordaten in der Form eines Ereignisses an das OS (92);
das OS (92) konfiguriert ist zum Bestimmen eines Ereignistyps des Ereignisses gemäß den Sensordaten und Übertragen der Sensordaten und des Ereignistyps an die Browser-"Engine" (93), wobei die Sensordaten ebenfalls in der Form eines Ereignisses an die Browser-"Engine" (93) übertragen werden; und
die Browser-"Engine" (93) konfiguriert ist zum Bestimmen, gemäß dem Ereignistyp,
dass das Ereignis registriert wurde, und Ausführen einer Verarbeitungslogik des Ereignisses; wobei die Verarbeitungslogik des Ereignisses Ereignislauschcode ist und
die Verarbeitungslogik des Ereignisses durch einen autorisierten Entwickler für einen Knoten in einen Dokumentobjektmodell- bzw. DOM-Baum einer Webseite im Voraus zum Zweck der Überwachung einer Zustandsänderung der ersten Sensorvorrichtung hinzugefügt wird; wobei die Webseite durch den DOM-Baum gebildet wird;
wobei die Browser-"Engine" (93) eine Browser-Shell, eine Webseiten-Parsing-und -Aufbereitung-"Engine" und eine Skript-Parsing-"Engine" umfasst; wobei:
die Browser-Shell konfiguriert ist zum Empfangen der Sensordaten und des Ereignistyps, übertragen vom OS, Bestimmen einer ersten Webseite, die mit dem Ereignis assoziiert ist, gemäß dem Ereignistyp und Übertragen der ersten Webseite, der Sensordaten und des Ereignistyps an die Webseiten-Parsing- und -Aufbereitung-"Engine";
die Webseiten-Parsing- und -Aufbereitung-"Engine" konfiguriert ist zum Bestimmen,
gemäß dem Ereignistyp, dass ein erster Knoten das Ereignis registriert hat, Ausfindigmachen, gemäß der Kennung des ersten Knotens und dem Ereignistyp, eines Portals der Verarbeitungslogik des Ereignisses und Aufrufen der Skript-Parsing-"Engine", wobei der erste Knoten ein oder mehrere Knoten in dem DOM-Baum einer ersten Webseite ist, wobei das Portal der Verarbeitungslogik des Ereignisses eine Adresse zum Speichern der Verarbeitungslogik des Ereignisses ist; und
die Skript-Parsing-"Engine" konfiguriert ist zum Ausführen der Verarbeitungslogik des Ereignisses;
wobei das Endgerät ferner eine zweite Sensorvorrichtung umfasst, wobei die Verarbeitungslogik des Ereignisses ein Portal zum Aufrufen eines Erfassungsverfahrens der zweiten Sensorvorrichtung umfasst, das Portal zum Aufrufen des Erfassungsverfahrens der zweiten Sensorvorrichtung in die Verarbeitungslogik des Ereignisses im Voraus durch den autorisierten Entwickler hinzugefügt wird und die Skript-Parsing-"Engine" spezifisch konfiguriert ist zum:
Aufrufen des Erfassungsverfahrens der zweiten Sensorvorrichtung gemäß dem Portal zum Aufrufen des Erfassungsverfahrens der zweiten Sensorvorrichtung.

8. Rechnerknoten nach Anspruch 7, wobei die Browser-Shell spezifisch konfiguriert ist zum:
Empfangen der Sensordaten und des Ereignistyps, die vom OS übertragen werden;
wenn bestimmt wird, dass das Ereignis mit einer gegenwärtig aktiven Webseite assoziiert ist, wobei die gegenwärtig aktive Webseite eine erste Webseite ist, Übertragen der ersten Webseite, der Sensordaten und des Ereignistyps an die Webseiten-Parsing-und -Aufbereitung-"Engine"; und
wenn bestimmt wird, dass das Ereignis mit allen Webseiten in der Laufzeit assoziiert ist, wobei jede Webseite in der Laufzeit jeweils eine erste Webseite ist, Übertragen jeder ersten Webseite, der Sensordaten und des Ereignistyps an die Webseiten-Parsing-und -Aufbereitung-"Engine"; wobei die sämtlichen Webseiten in der Laufzeit die gegenwärtig aktive Webseite und Webseiten, die in der Laufzeit sind, aber nicht aktiv sind, enthalten.

9. Rechnerknoten nach Anspruch 7, wobei:
die Webseiten-Parsing- und -Aufbereitung-"Engine" ferner konfiguriert ist zum Lesen von Skriptinhalten des ersten Knotens in der ersten Webseite und Aufrufen der Skript-Parsing-"Engine", bevor die erste Sensorvorrichtung die Zustandsänderung erfasst und
die Sensordaten erzeugt;
die Skript-Parsing-"Engine" ferner konfiguriert ist zum Ausführen der Skriptinhalte des ersten Knotens, Bestimmen, dass der Ereignistyp und die Verarbeitungslogik des Ereignisses in den Skriptinhalten des ersten Knotens vorhanden sind, und Übertragen des Ereignistyps des Ereignisses und der Verarbeitungslogik des Ereignisses an die Webseiten-Parsing- und -Aufbereitung-"Engine";
die Webseiten-Parsing- und -Aufbereitung-"Engine" ferner konfiguriert ist zum Übertragen der Verarbeitungslogik des Ereignisses an die Skript-Parsing-"Engine", um das Ereignis zu registrieren;
die Skript-Parsing-"Engine" ferner konfiguriert ist zum Verkapseln der Verarbeitungslogik und Zurücksenden eines Portals der Verarbeitungslogik an die Webseiten-Parsing- und -Aufbereitung-"Engine"; und
die Webseiten-Parsing- und -Aufbereitung-"Engine" ferner konfiguriert ist zum Hinzufügen des Ereignistyps des Ereignisses und des Portals der Verarbeitungslogik in eine Ereignis-Überwachungsliste des ersten Knotens.

10. Rechnerknoten nach Anspruch 7, wobei die Webseiten-Parsing- und -Aufbereitung-"Engine" ferner konfiguriert ist zum:
Parsen der ersten Webseite, bevor die erste Sensorvorrichtung die Zustandsänderung erfasst und die Sensordaten erzeugt, und Bestimmen, dass ein für den ersten Knoten definiertes Ereignisattribut in der ersten Webseite vorhanden ist;
Bestimmen des Ereignistyps und der Verarbeitungslogik des Ereignisses korrespondierend mit dem Ereignisattribut;
Übertragen der Verarbeitungslogik des Ereignisses an die Skript-Parsing-"Engine",
um das berichtete Ereignis zu registrieren;
die Skript-Parsing-"Engine" ferner konfiguriert ist zum Verkapseln der Verarbeitungslogik und Zurücksenden eines Portals der Verarbeitungslogik an die Webseiten-Parsing- und -Aufbereitung-"Engine"; und
die Webseiten-Parsing- und -Aufbereitung-"Engine" ferner konfiguriert ist zum Hinzufügen des Ereignistyps des Ereignisses und des Portals der Verarbeitungslogik in eine Ereignis-Überwachungsliste des ersten Knotens.

11. Rechnerknoten nach Anspruch 9 oder Anspruch 10, wobei die Webseiten-Parsing-und -Aufbereitung-"Engine" ferner konfiguriert ist zum:
Hinzufügen einer Kennung des ersten Knotens und des Ereignistyps des Ereignisses in eine Ereignisverwaltung-Hashtabelle, nachdem das von der Skript-Parsing-"Engine" zurückgesandte Portal der Verarbeitungslogik und der Ereignistyp des Ereignisses in die Ereignisüberwachungsliste des ersten Knotens hinzufügt wurden; und
Abfragen der Hashtabelle und Bestimmen, dass der Ereignistyp des Ereignisses in einem Tabelleneintrag korrespondierend mit der Kennung des ersten Knotens vorhanden ist.

12. Rechnerknoten nach Anspruch 7, wobei
die Skript-Parsing-"Engine" spezifisch konfiguriert ist zum Parsen der Sensordaten und Modifizieren von Webseiteninhalten der ersten Webseite, die in der Webseiten-Parsing- und -Aufbereitung-"Engine" gespeichert sind.

## Revendications

1. Procédé de traitement de données de capteur, appliqué à un noeud de calcul, le noeud de calcul comprenant une couche matérielle, un système d'exploitation, dit OS, tournant sur la couche matérielle et un moteur de navigateur tournant sur l'OS, la couche matérielle comprenant un premier dispositif capteur, et le procédé étant **caractérisé en ce qu'**il comprend :
la détection (401), par le premier dispositif capteur, d'un changement d'état, la génération de données de capteur et la transmission (305) des données de capteur à l'OS sous la forme d'un événement ;
la détermination (402), par l'OS, d'un type d'événement de l'événement en fonction des données de capteur, et la transmission (306) des données de capteur et du type d'événement au moteur de navigateur, les données de capteur étant également transmises au moteur de navigateur sous la forme d'un événement ; et
la détermination (307, 403), par le moteur de navigateur, en fonction du type d'événement, que l'événement a été enregistré, et l'exécution (308) d'une logique de traitement de l'événement ; la logique de traitement de l'événement étant un code d'écoute d'événement et la logique de traitement de l'événement étant ajoutée préalablement par un développeur agréé pour un noeud dans une arborescence de Modèle Objet de Document, dit DOM, d'une page Web aux fins de surveiller un changement d'état du premier dispositif capteur ; la page Web étant formée par l'arborescence de DOM;
dans lequel le moteur de navigateur comprend un Shell de navigateur, un moteur de parsage et de rendu de page Web et un moteur de parsage de script, et la détermination, par le moteur de navigation en fonction du type d'événement, que l'événement a été enregistré et l'exécution d'une logique de traitement de l'événement comprennent :
la réception, par le Shell de navigateur, des données de capteur et du type d'événement transmis par l'OS, la détermination d'une première page Web associée à l'événement en fonction du type d'événement, et la transmission de la première page Web, des données de capteur et du type d'événement au moteur de parsage et de rendu de page Web, les données de capteur étant transmises par l'OS sous la forme d'un événement ;
et
la détermination, par le moteur de parsage et de rendu de page Web, en fonction du type d'événement, qu'un premier noeud a enregistré l'événement, et la recherche, en fonction d'un identificateur du premier noeud et du type d'événement, d'un portail de la logique de traitement de l'événement, et l'appel du moteur de parsage de script afin d'exécuter la logique de traitement de l'événement ; le premier noeud étant un ou plusieurs noeuds dans l'arborescence de DOM d'une première page Web, le portail de la logique de traitement de l'événement étant une adresse de mémorisation de la logique de traitement de l'événement ;
dans lequel la logique de traitement de l'événement comprend un portail d'appel d'un procédé de détection d'un deuxième dispositif capteur, et l'appel du moteur de parsage de script afin d'exécuter la logique de traitement de l'événement comprend plus particulièrement :
l'appel, par le moteur de parsage de script, du procédé de détection du deuxième dispositif capteur en fonction du portail d'appel du procédé de détection du deuxième dispositif capteur, le portail d'appel du procédé de détection du deuxième dispositif capteur étant ajouté préalablement dans la logique de traitement de l'événement par le développeur agréé.

2. Procédé selon la revendication 1, dans lequel :
la détermination d'une première page Web associée à l'événement en fonction du type d'événement et la transmission de la première page Web, des données de capteur et du type d'événement au moteur de parsage et de rendu de page Web comprennent plus particulièrement :
s'il est déterminé que l'événement est associé à une page Web actuellement active, la page Web actuellement active étant une première page Web, la transmission de la première page Web, des données de capteur et du type d'événement au moteur de parsage et de rendu de page Web ; et
s'il est déterminé que l'événement est associé à une totalité de pages Web dans l'environnement d'exécution, chaque page Web dans l'environnement d'exécution étant respectivement une première page, la transmission de chaque première page Web, des données de capteur et du type d'événement au moteur de parsage et de rendu de page Web ; la totalité de pages Web dans l'environnement d'exécution incorporant la page Web actuellement active et des pages Web qui appartiennent à l'environnement d'exécution mais qui ne sont pas actives.

3. Procédé selon la revendication 1, comprenant en outre, préalablement à la détection, par le premier dispositif capteur, du changement d'état et à la génération des données de capteur :
la lecture, par le moteur de parsage et de rendu de page Web, de contenus de script du premier noeud dans la première page Web et l'appel du moteur de parsage de script afin d'exécuter les contenus de script du premier noeud ;
la détermination, par le moteur de parsage de script, de la présence du type d'événement de l'événement et de la logique de traitement de l'événement dans les contenus de script du premier noeud et la transmission du type d'événement de l'événement et de la logique de traitement de l'événement au moteur de parsage et de rendu de page Web ;
la transmission, par le moteur de parsage et de rendu de page Web, de la logique de traitement de l'événement au moteur de parsage de script afin d'enregistrer l'événement ;
l'encapsulage, par le moteur de parsage de script, de la logique de traitement et le renvoi d'un portail de la logique de traitement au moteur de parsage et de rendu de page Web ; et
l'ajout, par le moteur de parsage et de rendu de page Web, du type d'événement de l'événement et du portail de la logique de traitement dans une liste de surveillance d'événement du premier noeud.

4. Procédé selon la revendication 1, comprenant en outre, préalablement à la détection, par le premier dispositif capteur, du changement d'état et à la génération des données de capteur :
le parsage, par le moteur de parsage et de rendu de page Web, de la première page Web et la détermination de la présence d'un attribut d'événement défini pour le premier noeud dans la première page Web ;
la détermination du type d'événement et de la logique de traitement de l'événement correspondant à l'attribut d'événement ;
la transmission de la logique de traitement de l'événement au moteur de parsage de script afin d'enregistrer l'événement ;
l'encapsulage, par le moteur de parsage de script, de la logique de traitement et le renvoi d'un portail de la logique de traitement au moteur de parsage et de rendu de page Web ; et
l'ajout, par le moteur de parsage et de rendu de page Web, du type d'événement de l'événement et du portail de la logique de traitement dans une liste de surveillance d'événement du premier noeud.

5. Procédé selon la revendication 3 ou 4, comprenant en outre, suite à l'ajout, par le moteur de parsage et de rendu de page Web, du portail de la logique de traitement renvoyé par le moteur de parsage de script et du type d'événement de l'événement dans la liste de surveillance d'événement du premier noeud :
l'ajout, par le moteur de parsage et de rendu de page Web, d'un identificateur du premier noeud et du type d'événement de l'événement dans une table de Hachage de gestion d'événement ; et
dans lequel la détermination, par le moteur de parsage et de rendu de page Web en fonction du type d'événement, que le premier noeud dans la première page Web a enregistré l'événement comprend :
l'interrogation, par le moteur de parsage et de rendu de page Web, de la table de Hachage et la détermination de la présence du type d'événement de l'événement dans une entrée de la table correspondant à l'identificateur du premier noeud.

6. Procédé selon la revendication 1, dans lequel l'appel du moteur de parsage de script afin d'exécuter la logique de traitement de l'événement comprend plus particulièrement :
le parsage, par le moteur de parsage de script, des données de capteur et la modification de contenus de page Web de la première page Web mémorisés dans le moteur de parsage et de rendu de page Web.

7. Noeud de calcul (900), comprenant une couche matérielle (91), un système d'exploitation, dit OS, (92) tournant sur la couche matérielle (91) et un moteur de navigateur (93) tournant sur l'OS (92), la couche matérielle (91) comprenant un premier dispositif capteur (911) ; le noeud de calcul étant **caractérisé en ce que** :
le premier dispositif capteur (911) est configuré pour détecter un changement d'état,
générer des données de capteur et transmettre les données de capteur à l'OS (92) sous la forme d'un événement ;
l'OS (92) est configuré pour déterminer un type d'événement de l'événement en fonction des données de capteur, et transmettre les données de capteur et le type d'événement au moteur de navigateur (93), les données de capteur étant également transmises au moteur de navigateur (93) sous la forme d'un événement ; et
le moteur de navigateur (93) est configuré pour déterminer, en fonction du type d'événement, que l'événement a été enregistré, et exécuter une logique de traitement de l'événement ; la logique de traitement de l'événement étant un code d'écoute d'événement et la logique de traitement de l'événement étant ajoutée préalablement par un développeur agréé pour un noeud dans une arborescence de Modèle Objet de Document, dit DOM, d'une page Web aux fins de surveiller un changement d'état du premier dispositif capteur ; la page Web étant formée par l'arborescence de DOM ;
dans lequel le moteur de navigateur (93) comprend un Shell de navigateur, un moteur de parsage et de rendu de page Web et un moteur de parsage de script ; dans lequel :
le Shell de navigateur est configuré pour recevoir les données de capteur et le type d'événement transmis par l'OS, déterminer une première page Web associée à l'événement en fonction du type d'événement, et transmettre la première page Web,
les données de capteur et le type d'événement au moteur de parsage et de rendu de page Web ;
le moteur de parsage et de rendu de page Web est configuré pour déterminer, en fonction du type d'événement, qu'un premier noeud a enregistré l'événement, rechercher, en fonction de l'identificateur du premier noeud et du type d'événement, un portail de la logique de traitement de l'événement, et appeler le moteur de parsage de script ; le premier noeud étant un ou plusieurs noeuds dans l'arborescence de DOM d'une première page Web, le portail de la logique de traitement de l'événement étant une adresse de mémorisation de la logique de traitement de l'événement ; et
le moteur de parsage de script est configuré pour exécuter la logique de traitement de l'événement ;
dans lequel le terminal comprend en outre un deuxième dispositif capteur, dans lequel la logique de traitement de l'événement comprend un portail d'appel d'un procédé de détection d'un deuxième dispositif capteur, le portail d'appel du procédé de détection du deuxième dispositif capteur est ajouté préalablement dans la logique de traitement de l'événement par le développeur agréé, et le moteur de parsage de script est configuré plus particulièrement pour :
appeler le procédé de détection du deuxième dispositif capteur en fonction du portail d'appel du procédé de détection du deuxième dispositif capteur

8. Noeud de calcul selon la revendication 7, dans lequel le Shell de navigateur est configuré plus particulièrement pour :
recevoir les données de capteur et le type d'événement transmis par l'OS ;
s'il est déterminé que l'événement est associé à une page Web actuellement active, la page Web actuellement active étant une première page Web, transmettre la première page Web, les données de capteur et le type d'événement au moteur de parsage et de rendu de page Web ; et
s'il est déterminé que l'événement est associé à une totalité de pages Web dans l'environnement d'exécution, chaque page Web dans l'environnement d'exécution étant respectivement une première page, transmettre chaque première page Web, les données de capteur et le type d'événement au moteur de parsage et de rendu de page Web ; la totalité de pages Web dans l'environnement d'exécution incorporant la page Web actuellement active et des pages Web qui appartiennent à l'environnement d'exécution mais qui ne sont pas actives.

9. Noeud de calcul selon la revendication 7, dans lequel :
le moteur de parsage et de rendu de page Web est configuré en outre pour lire des contenus de script du premier noeud dans la première page Web et appeler le moteur de parsage de script avant que le premier dispositif capteur ne détecte le changement d'état et ne génère les données de capteur ;
le moteur de parsage de script est configuré en outre pour exécuter les contenus de script du premier noeud, déterminer la présence du type d'événement et de la logique de traitement de l'événement dans les contenus de script du premier noeud et transmettre le type d'événement de l'événement et la logique de traitement de l'événement au moteur de parsage et de rendu de page Web ;
le moteur de parsage et de rendu de page Web est configuré en outre pour transmettre la logique de traitement de l'événement au moteur de parsage de script afin d'enregistrer l'événement ;
le moteur de parsage de script est configuré en outre pour encapsuler la logique de traitement et renvoyer un portail de la logique de traitement au moteur de parsage et de rendu de page Web ; et
le moteur de parsage et de rendu de page Web est configuré en outre pour ajouter le type d'événement de l'événement et le portail de la logique de traitement dans une liste de surveillance d'événement du premier noeud.

10. Noeud de calcul selon la revendication 7, dans lequel le moteur de parsage et de rendu de page Web est configuré en outre pour :
parser la première page Web avant que le premier dispositif capteur ne détecte le changement d'état et ne génère les données de capteur et déterminer la présence d'un attribut d'événement défini pour le premier noeud dans la première page Web ;
déterminer le type d'événement et la logique de traitement de l'événement correspondant à l'attribut d'événement ;
transmettre la logique de traitement de l'événement au moteur de parsage de script afin d'enregistrer l'événement signalé ;
le moteur de parsage de script est configuré en outre pour encapsuler la logique de traitement et renvoyer un portail de la logique de traitement au moteur de parsage et de rendu de page Web ; et
le moteur de parsage et de rendu de page Web est configuré en outre pour ajouter le type d'événement de l'événement et le portail de la logique de traitement dans une liste de surveillance d'événement du premier noeud.

11. Noeud de calcul selon la revendication 9 ou 10, dans lequel le moteur de parsage et de rendu de page Web est configuré en outre pour :
ajouter un identificateur du premier noeud et du type d'événement de l'événement dans une table de Hachage de gestion d'événement après que le portail de la logique de traitement renvoyé par le moteur de parsage de script et le type d'événement de l'événement ont été ajoutés dans la liste de surveillance d'événement du premier noeud ; et
interroger la table de Hachage et déterminer la présence du type d'événement de l'événement dans une entrée de la table correspondant à l'identificateur du premier noeud.

12. Noeud de calcul selon la revendication 7, dans lequel :
le moteur de parsage de script est configuré plus particulièrement pour parser les données de capteur et modifier des contenus de page Web de la première page Web mémorisés dans le moteur de parsage et de rendu de page Web.
